# FASCICULE DE BREVET EUROPEEN

(11) **EP 4 668 715 B1**
(45) Date de publication et mention de la délivrance du brevet: **12.08.2026**
(21) Numéro de dépôt: 25183545.0
(22) Date de dépôt: 18.06.2025
(51) Int. Cl.: H04L 67/12, H04L 69/08, H04L 69/18

(54) **PROCEDE DE CONFIGURATION D'UN PROTOCOLE DE COMMUNICATION D'UN DISPOSITIF NOEUD**
VERFAHREN ZUR KONFIGURATION EINES KOMMUNIKATIONSPROTOKOLLS EINER KNOTENVORRICHTUNG
METHOD FOR CONFIGURING A COMMUNICATION PROTOCOL OF A NODE DEVICE

(30) Priorité: 19.06.2024 FR 2406577
(43) Date de publication de la demande: 24.12.2025
(73) Titulaire: SAGEMCOM ENERGY & TELECOM SAS, 92270 Bois-Colombes (FR)
(72) Inventeur: HLEL, El Kefi, 92270 Bois-Colombes (FR); RAZAZIAN, Kaveh, 92270 Bois-Colombes (FR); BEN HADJ HMIDA, Asma, 92270 Bois-Colombes (FR)
(74) Mandataire: Cabinet Le Guen Maillet

(56) Documents cités:
- US-A1- 2020 225 655
- US-A1- 2023 186 201

## Description

### DOMAINE TECHNIQUE

Le domaine de l'invention est celui des réseaux de communication implémentés sur un réseau d'alimentation électrique et comportant un dispositif concentrateur et une pluralité de dispositifs nœuds.

Plus précisément, la présente invention concerne un procédé de configuration d'un protocole de communication courant d'un dispositif nœud, pour communiquer avec un dispositif concentrateur via un réseau de communication implémenté sur un réseau d'alimentation électrique.

La présente invention concerne également un dispositif nœud, ainsi qu'un produit programme d'ordinateur et un support de stockage permettant la mise en œuvre d'un tel procédé.

La présente invention concerne également un procédé et un système de réalisation d'une mise à jour d'un réseau de communication comportant un dispositif concentrateur et une pluralité de dispositifs nœuds.

### ETAT DE LA TECHNIQUE ANTERIEURE

D'une manière connue, de nombreux réseaux de communication ont une topologie (au moins au niveau logique) sous forme d'arbre pour permettre d'étendre la portée des communications. Les dispositifs d'un tel réseau de communication sont généralement appelés nœuds, ou encore dispositifs nœuds. Un dispositif nœud tient le rôle de racine du réseau de communication et gère le réseau de communication de manière à organiser le partage d'un même support de communication : émission de balises, gestion de topologie, etc. Des dispositifs nœuds servent alors de relais pour le compte d'autres dispositifs nœuds du réseau de communication lorsque ces derniers n'arrivent pas à recevoir directement des informations du dispositif nœud racine (également appelé « nœud de base »).

On trouve notamment de tels réseaux de communication dans le cadre des réseaux d'alimentation électrique de type AMM (« Automated Meter Management » en anglais), mettant en œuvre une gestion automatique de relevés de compteurs électriques et dans lesquels des communications sont établies entre des compteurs électriques, dits intelligents ou communicants (« smart meters » en anglais), et un dispositif concentrateur de données (« data concentrator » en anglais), parfois appelé nœud de base (« base node » en anglais). C'est le cas par exemple dans les spécifications PRIME (« PoweRline Intelligent Metering Evolution » en anglais). Le dispositif concentrateur est alors la racine du réseau de communication. Les échanges entre les compteurs électriques (dispositifs nœuds) et le dispositif concentrateur de données s'appuient sur des communications par courants porteurs en ligne (CPL, ou PLC pour « Power-Line Communications » en anglais).

Actuellement, dans les réseaux de communication implémentés sur un réseau d'alimentation électrique et comportant un dispositif concentrateur et une pluralité de dispositifs nœuds (par exemple des compteurs d'électricité communicants dans le cas d'une application de comptage intelligent, ou « smart metering » en anglais), chaque dispositif nœud installé sur le terrain comprend une unique pile protocolaire pour assurer la communication avec le dispositif concentrateur. En d'autres termes, cette unique pile protocolaire permet au dispositif nœud d'implémenter un protocole de communication avec le dispositif concentrateur sur le réseau de communication.

Un document d'art antérieur US 2023/0186201A1 décrit des systèmes et méthodes de collecte, d'analyse et d'optimisation de données issues de capteurs et de sources IoT, combinant traitement cloud, analytique avancée et moteurs de décision afin de générer des recommandations ou actions automatisées en temps réel.

Un autre ocument d'art antérieur US 2020/0225655A1 décrit des techniques de collecte, de traitement et d'exploitation de données issues de sources connectées, notamment pour l'analyse comportementale et l'adaptation dynamique de services ou de contenus, au moyen de plateformes de traitement distribuées et de moteurs de décision automatisés.

Un inconvénient de la solution actuelle est qu'une migration vers l'utilisation, par les dispositifs nœuds (par exemple des compteurs communicants), d'un autre protocole de communication (par exemple dans le cadre d'une transition progressive entre une ancienne et une nouvelle technologie de communication) nécessite soit le remplacement de tous les dispositifs nœuds, soit une mise à jour logicielle de ceux déjà installés (en particulier afin de changer la pile protocolaire). Ces deux opérations sont très coûteuses du point de vue investissement et présentent des risques du point de vue fiabilité. En outre, la solution actuelle ne garantit pas la non-perte de communication avec tous les dispositifs nœuds, ni l'évolutivité et l'efficacité en termes de performance, débit et maintenance.

### EXPOSE DE L'INVENTION

Il est proposé ici un procédé de configuration d'un protocole de communication courant d'un dispositif nœud, pour communiquer avec un dispositif concentrateur via un réseau de communication implémenté sur un réseau d'alimentation électrique. Le procédé est implémenté par le dispositif nœud qui comprend de la circuiterie électronique et stocke deux piles protocolaires, chaque pile protocolaire permettant, quand elle est exécutée par la circuiterie électronique du dispositif nœud, d'implémenter un protocole distinct de communication avec le dispositif concentrateur sur le réseau de communication. Le procédé comprend : détecter un évènement prédéterminé ; et si ledit évènement est détecté, commuter de l'une des piles protocolaires à l'autre, afin de modifier le protocole de communication courant implémenté par le dispositif nœud.

Ainsi, avec la solution proposée, le dispositif nœud est capable de commuter entre deux piles protocolaires permettant chacune d'implémenter un protocole distinct de communication avec le dispositif concentrateur. Ceci permet une migration vers l'utilisation d'un autre protocole de communication (différent d'un protocole courant), sans nécessiter le remplacement du dispositif nœud ni sa mise à jour logicielle (pour changer de pile protocolaire). Ceci garantit en outre la non-perte de communication pour le dispositif nœud.

Selon un mode de réalisation particulier, le dispositif nœud est un compteur communicant.

Selon un mode de réalisation particulier, l'une des piles protocolaires permet d'implémenter le protocole de communication PRIME (par exemple la version 1.4), pour « PoweRline Intelligent Metering Evolution », et l'autre des piles protocolaires permet d'implémenter le protocole de communication M&M, pour « Meters & More ».

Dans une première implémentation (cas d'une commutation protocolaire automatique, c'est-à-dire décidée par le dispositif nœud), la détection d'un évènement prédéterminé comprend :
- écouter le réseau de communication pour détecter le protocole de communication implémenté par le dispositif concentrateur ; et
- détecter si le protocole de communication courant implémenté par le dispositif nœud est différent du protocole de communication courant implémenté par le dispositif concentrateur ;
et l'évènement prédéterminé est une détection que le protocole de communication courant implémenté par le dispositif nœud est différent du protocole de communication implémenté par le dispositif concentrateur.

Selon une caractéristique particulière de la première implémentation, l'écoute du réseau de communication n'est effectuée que si le dispositif nœud ne s'est pas déjà enregistré auprès du réseau de communication en ayant utilisé le protocole de communication courant implémenté par le dispositif nœud.

Selon une caractéristique particulière de la première implémentation, l'écoute du réseau de communication pour détecter le protocole de communication implémenté par le dispositif concentrateur comprend :
- détecter si, avant l'écoulement d'une première temporisation, le dispositif nœud a réussi à s'enregistrer auprès du réseau de communication en utilisant le protocole de communication courant implémenté par le dispositif nœud ; et
- détecter le protocole de communication implémenté par le dispositif concentrateur comme étant :
   ∘ identique au protocole de communication courant implémenté par le dispositif nœud si, avant l'écoulement de la première temporisation, le dispositif nœud a réussi à s'enregistrer auprès du réseau de communication ;
   ∘ différent du protocole de communication courant implémenté par le dispositif nœud si, avant l'écoulement de la première temporisation, le dispositif nœud n'a pas réussi à s'enregistrer auprès du réseau de communication.

Selon une caractéristique particulière de la première implémentation, l'écoute du réseau de communication pour détecter le protocole de communication implémenté par le dispositif concentrateur comprend :
- détecter une trame reçue via le réseau de communication ;
- analyser un préambule de la trame reçue ; et
- en fonction de la structure du préambule de la trame reçue, détecter le protocole de communication implémenté par le dispositif concentrateur.

Selon une caractéristique particulière de la première implémentation, l'écoute du réseau de communication pour détecter le protocole de communication implémenté par le dispositif concentrateur comprend :
- déclencher une deuxième temporisation ;
- pendant la deuxième temporisation, à chaque détection d'une trame reçue via le réseau de communication :
   ∘ analyser un préambule de la trame reçue ; et
   ∘ en fonction de la structure du préambule de la trame reçue, incrémenter un premier compteur associé à un premier protocole de communication, si la structure du préambule de la trame reçue correspond à une trame selon ledit premier protocole de communication ou incrémenter un deuxième compteur associé à un deuxième protocole de communication, si la structure du préambule de la trame reçue correspond à une trame selon le deuxième protocole de communication ;
- après écoulement de la deuxième temporisation, détecter le protocole de communication implémenté par le dispositif concentrateur comme étant le protocole associé à celui des premier et deuxième compteurs possédant la valeur la plus grande.

Dans une deuxième implémentation (cas d'une commutation protocolaire non-automatique, c'est-à-dire non-décidée par le dispositif nœud), l'évènement prédéterminé est la réception par le dispositif nœud, via un canal de communication particulier du réseau de communication, d'une commande de commutation de protocole transmise par le dispositif concentrateur.

Il est aussi proposé un dispositif nœud configuré pour communiquer avec un dispositif concentrateur via un réseau de communication implémenté sur un réseau d'alimentation électrique, le dispositif nœud stockant deux piles protocolaires et comprenant de la circuiterie électronique configurée pour implémenter le procédé évoqué ci-dessus selon l'un quelconque de ses modes de réalisation.

Il est aussi proposé un produit programme d'ordinateur, comportant des instructions entraînant l'exécution, par un processeur, du procédé évoqué ci-dessus selon l'un quelconque de ses modes de réalisation, lorsque lesdites instructions sont exécutées par le processeur.

Il est aussi proposé un support de stockage, stockant de telles instructions.

Il est aussi proposé un procédé de réalisation d'une mise à jour d'un réseau de communication comportant un dispositif concentrateur et une pluralité de dispositifs nœuds, chaque dispositif nœud comprenant de la circuiterie électronique configurée pour implémenter le procédé évoqué ci-dessus selon l'un quelconque de ses modes de réalisation, chaque dispositif nœud stockant deux piles protocolaires permettant chacune d'implémenter un protocole distinct de communication parmi des premier et deuxième protocoles de communication, caractérisé en ce que :
- avant mise à jour du dispositif concentrateur, le dispositif concentrateur implémente le premier protocole de communication pour communiquer avec des dispositifs nœuds, parmi lesdits dispositifs nœuds, qui se sont enregistrés auprès de lui en utilisant le premier protocole de communication ;
- après mise à jour du dispositif concentrateur, le dispositif concentrateur implémente le deuxième protocole de communication pour communiquer avec des dispositifs nœuds, parmi lesdits dispositifs nœuds, qui se sont enregistrés auprès de lui en utilisant le deuxième protocole de communication ; et
- par exécution du procédé évoqué ci-dessus selon l'un quelconque de ses modes de réalisation, chaque dispositif nœud enregistré auprès du dispositif concentrateur en utilisant le premier protocole de communication commute de pile protocolaire, afin de modifier le protocole de communication courant implémenté par le dispositif nœud vers le deuxième protocole de communication.

Il est aussi proposé un système de mise à jour d'un réseau de communication comportant un dispositif concentrateur et une pluralité de dispositifs nœuds, chaque dispositif nœud comprenant de la circuiterie électronique configurée pour implémenter le procédé évoqué ci-dessus selon l'un quelconque de ses modes de réalisation, chaque dispositif nœud stockant deux piles protocolaires permettant chacune d'implémenter un protocole distinct de communication parmi des premier et deuxième protocoles de communication. Le dispositif concentrateur comprend de la circuiterie électronique configurée pour :
- avant mise à jour du dispositif concentrateur, implémenter le premier protocole de communication pour communiquer avec des dispositifs nœuds, parmi lesdits dispositifs nœuds, qui se sont enregistrés auprès de lui en utilisant le premier protocole de communication ; et
- après mise à jour du dispositif concentrateur, implémenter le deuxième protocole de communication pour communiquer avec des dispositifs nœuds, parmi lesdits dispositifs nœuds, qui se sont enregistrés auprès de lui en utilisant le deuxième protocole de communication.

En outre, la circuiterie électronique de chaque dispositif nœud est configurée pour, après mise à jour du dispositif concentrateur :
- si ledit dispositif nœud est enregistré auprès du dispositif concentrateur en utilisant le premier protocole de communication, exécuter le procédé évoqué ci-dessus, selon l'un quelconque de ses modes de réalisation, pour commuter de l'une des piles protocolaires à l'autre, afin de modifier le protocole de communication courant implémenté par le dispositif nœud vers le deuxième protocole de communication.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un réseau de communication dont la topologie logique est sous forme d'arbre, déployé sur un réseau d'alimentation électrique et dans lequel l'invention peut être mise en œuvre ;
[Fig. 2] illustre schématiquement un dispositif nœud comprenant deux piles protocolaires, dans un mode de réalisation ;
[Fig. 3] illustre schématiquement la gestion d'une architecture logicielle comprenant les deux piles protocolaires et le programme de sélection et de commutation protocolaire compris dans le dispositif nœud de la Fig. 2 ;
[Fig. 4] illustre schématiquement un exemple d'architecture matérielle d'un dispositif nœud et d'un dispositif concentrateur, dans un mode de réalisation ;
[Fig. 5] illustre schématiquement un exemple d'algorithme de configuration d'un protocole de communication courant d'un dispositif nœud ;
[Fig. 6] illustre schématiquement un exemple d'algorithme de configuration d'un protocole de communication courant d'un dispositif nœud, dans une première implémentation particulière d'une commutation protocolaire automatique ;
[Fig. 7] est un détail de l'étape 602 de la Fig. 6 et illustre schématiquement un exemple d'algorithme de détection du protocole implémenté par le dispositif concentrateur, dans le cas où le protocole courant implémenté par le dispositif nœud est le protocole M&M ;
[Fig. 8] est un détail de l'étape 606 de la Fig. 6 et illustre schématiquement un exemple d'algorithme de détection du protocole implémenté par le dispositif concentrateur, dans le cas où le protocole courant implémenté par le dispositif nœud est le protocole PRIME 1.4 ;
[Fig. 9] illustre schématiquement un exemple d'algorithme de configuration d'un protocole de communication courant d'un dispositif nœud, dans une deuxième implémentation particulière d'une commutation protocolaire automatique ;
[Fig. 10] est un détail de l'étape 902 de la Fig. 9 et illustre schématiquement un premier exemple d'algorithme de détection du protocole implémenté par le dispositif concentrateur ;
[Fig. 11] est un détail de l'étape 902 de la Fig. 9 et illustre schématiquement un deuxième exemple d'algorithme de détection du protocole implémenté par le dispositif concentrateur ;
[Fig. 12] illustre schématiquement une structure de trame de type A PRIME 1.4 ;
[Fig. 13] illustre schématiquement une structure de trame physique M&M ; et
[Fig. 14] illustre schématiquement un algorithme de réalisation d'une mise à jour d'un réseau de communication comportant un dispositif concentrateur et une pluralité de dispositifs nœuds, dans un mode de réalisation (cas d'une commutation protocolaire non-automatique).

### EXPOSE DETAILLE DE MODES DE REALISATION

### Réseau de communication

La description qui suit détaille des modes de réalisation de la présente invention dans le cadre d'un réseau de communication, dont la topologie logique est sous forme d'arbre (c'est-à-dire hiérarchique à partir d'un dispositif racine aussi appelé dispositif concentrateur), déployé sur un réseau d'alimentation électrique, afin de mettre en œuvre des services de type AMM. Il convient toutefois de noter que la présente invention s'applique à tout réseau de communication implémenté sur un réseau d'alimentation électrique et comportant un dispositif concentrateur et une pluralité de dispositifs nœuds.

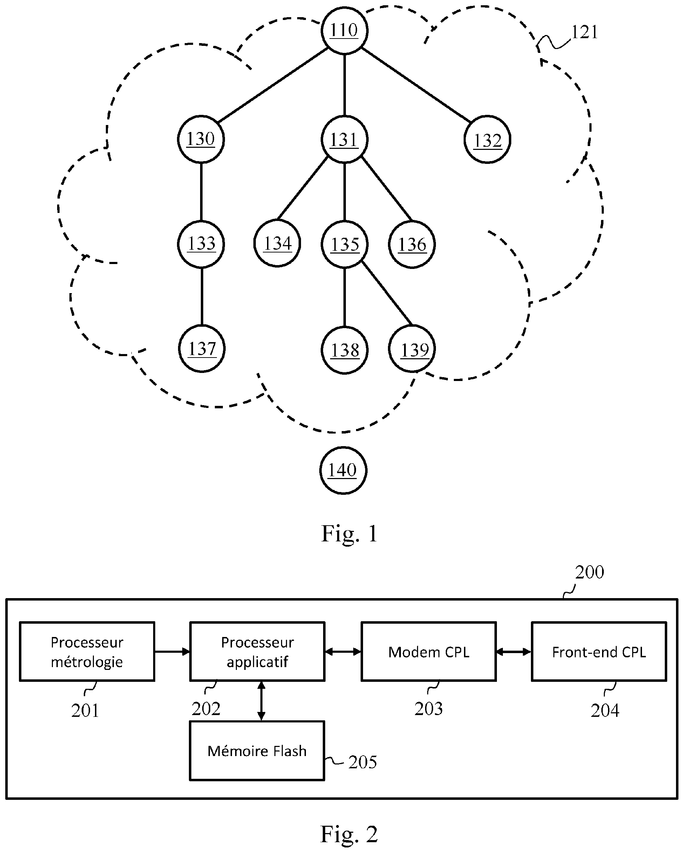

La **Fig. 1** illustre schématiquement un réseau de communication 121, dont la topologie logique est sous forme d'arbre, déployé sur un réseau d'alimentation électrique et dans lequel l'invention peut être mise en œuvre.

Le réseau de communication 121 est en forme d'arbre dont un dispositif nœud particulier 110, appelé dispositif concentrateur 110 (ou nœud de base), est la racine. Le réseau de communication 121 est destiné à permettre de connecter une pluralité de dispositifs nœuds au dispositif concentrateur 110. Les dispositifs nœuds que le réseau de communication 121 vise à connecter sont par exemple des compteurs électriques. Dans ce cas, le réseau de communication 121 permet d'établir des communications par courants porteurs en ligne (CPL) afin que le dispositif concentrateur 110 puisse notamment procéder automatiquement à des relevés de comptage de consommation électrique effectués par les compteurs électriques.

Dans un tel réseau de communication, un signal émis par un dispositif nœud n'est en général pas visible en tout point du réseau de communication. Chaque dispositif nœud émetteur de signaux dispose alors d'un « domaine de voisinage », c'est-à-dire d'un sous-ensemble du réseau de communication dans lequel tout dispositif nœud connecté peut recevoir de manière intelligible lesdits signaux. Le domaine de voisinage correspond à la portée des signaux émis, en fonction de paramètres prédéterminés de transmission (par exemple puissance, schéma de modulation et de codage...) du dispositif nœud émetteur du signal et également en fonction de caractéristiques du canal de communication (atténuation, bruit, impédance...). Chaque dispositif nœud du réseau de communication dispose ainsi de son propre domaine de voisinage.

Pour permettre d'étendre la portée des communications par courants porteurs en ligne, des dispositifs nœuds jouent le rôle de relais de données entre d'autres dispositifs nœuds et le dispositif concentrateur 110. Un tel dispositif relais est appelé commutateur (« switch » en anglais) dans les spécifications PRIME. Certaines communications entre des dispositifs nœuds et le dispositif concentrateur 110 peuvent nécessiter plusieurs relais de données successifs. Un dispositif nœud ne jouant pas le rôle de relais est appelé dispositif terminal. Une telle structure définit donc des rattachements de dispositifs nœuds les uns aux autres pour former l'arbre, c'est-à-dire la hiérarchie constituant le réseau de communication 121. Chaque dispositif nœud du réseau de communication 121 est ainsi associé à un niveau hiérarchique, correspondant typiquement à la quantité de dispositifs relais via lesquels ledit dispositif nœud doit passer pour atteindre la racine 110 du réseau de communication 121.

Un tel réseau de communication sous forme d'arbre est donc représenté sur la Fig. 1. Un dispositif nœud terminal 132 est directement rattaché au dispositif concentrateur 110. Deux autres dispositifs nœuds 130 et 131 sont aussi directement rattachés au dispositif concentrateur 110. Ces deux dispositifs nœuds 130 et 131 jouent le rôle de dispositifs relais entre le dispositif concentrateur 110 et d'autres dispositifs nœuds. Le dispositif nœud 130 joue le rôle de dispositif relais entre le dispositif concentrateur 110 et un dispositif nœud 133 qui, lui-même, joue le rôle de dispositif relais entre le dispositif nœud 130 et un dispositif terminal 137. Les communications entre le dispositif concentrateur 110 et le dispositif terminal 137 passent donc par deux dispositifs relais successifs, à savoir les dispositifs relais 130 et 133. Le dispositif nœud 131 joue le rôle de dispositif relais entre le dispositif concentrateur 110 et trois autres dispositifs nœuds 134, 135 et 136. Les dispositifs nœuds 134 et 136 sont des dispositifs terminaux, et le dispositif nœud 135 joue le rôle de dispositif relais entre le dispositif nœud 131 et deux dispositifs terminaux 138 et 139. Les dispositifs nœuds 130, 131 et 132 sont associés à un niveau hiérarchique de valeur « 0 », les dispositifs nœuds 133, 134, 135, 136 sont associés à un niveau hiérarchique de valeur « 1 », et ainsi de suite. Un dispositif nœud qui n'est pas rattaché au réseau de communication 121 est un dispositif déconnecté, tel que le dispositif nœud 140 sur la Fig. 1.

Il faut comprendre que la topologie logique du réseau de communication 121 n'est pas figée. La Fig. 1 représente la topologie logique du réseau de communication 121 à un instant donné. A cause notamment des phénomènes d'interférences (tels que bruit, atténuation, variation d'impédance, diaphonie, collision de signaux...), des dispositifs nœuds peuvent se trouver déconnectés du réseau de communication 121 et cherchent alors à se réenregistrer au sein du réseau de communication 121. La topologie logique du réseau de communication 121 à ce moment-là est alors probablement différente de la topologie logique du réseau de communication 121 avant déconnexion desdits dispositifs nœuds, des dispositifs nœuds ayant alors été potentiellement déchus de leur rôle de relais et d'autres ayant alors été potentiellement promus pour jouer le rôle de relais.

### Dispositif nœud

La Fig. 2 illustre schématiquement un dispositif nœud 200 (par exemple un compteur d'électricité communicant) comprenant deux piles protocolaires permettant chacune d'implémenter un protocole distinct (par exemple parmi les protocoles M&M et PRIME 1.4), dans un mode de réalisation. Dans ce mode de réalisation, le dispositif nœud 200 comprend :
- un processeur métrologie 201 ;
- une mémoire flash 205 pour stocker un programme applicatif commun comprenant d'une part les programmes (logiciels) des couches hautes des deux piles protocolaires M&M et PRIME 1.4 et d'autre part un programme (logiciel) de sélection et de commutation protocolaire, par exemple pour une commutation automatique entre les deux protocoles de communication M&M et PRIME 1.4 permettant la sélection du protocole de communication adéquat en garantissant la continuité de communication du dispositif nœud en cas d'échec de protocole en cours ;

- un processeur applicatif 202 exécutant le programme applicatif commun, et plus précisément d'une part les couches hautes des programmes des deux piles protocolaires et d'autre part le programme de sélection et de commutation protocolaire ;
- un modem CPL 203 qui intègre les couches basses des deux piles protocolaires M&M et PRIME 1.4 ; et
- une interface (« front-end » en anglais) CPL 204 pour interfacer le modem CPL 203 avec une ligne de transmission CPL.

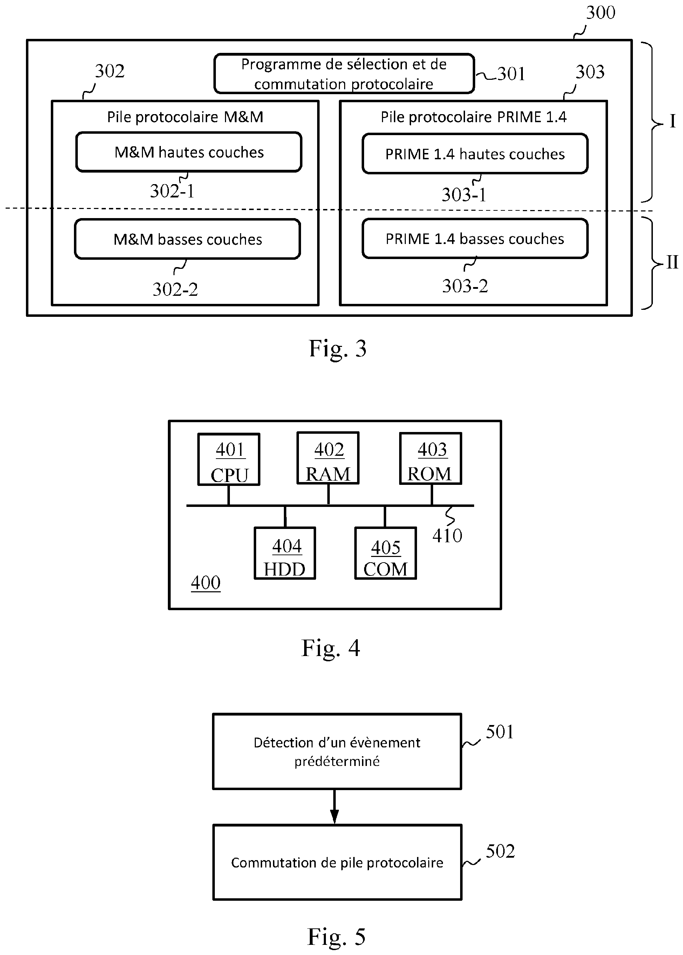

La **Fig. 3** illustre schématiquement la gestion d'une architecture logicielle 300 comprenant les deux piles protocolaires (pile protocolaire M&M, référencée 302, et pile protocolaire PRIME 1.4, référencée 303) et le programme de sélection et de commutation protocolaire (référencé 301) compris dans le dispositif nœud de la Fig. 2. Dans cet exemple, le processeur applicatif 202 exécute une première partie I de l'architecture logicielle, comprenant les couches hautes 302-1 et 303-1 des deux piles protocolaires et le programme de sélection et de commutation protocolaire 301. Le modem CPL 203 exécute une deuxième partie II de l'architecture logicielle, comprenant les couches basses 302-2 et 303-2 des deux piles protocolaires 302 et 303.

La **Fig. 4** illustre schématiquement un exemple d'architecture matérielle 400 d'un dispositif nœud, qui comprend alors, reliés par un bus de communication 410 : un processeur ou CPU (« Central Processing Unit » en anglais) 401 ; une mémoire vive RAM (« Random Access Memory » en anglais) 402 ; une mémoire morte ROM (« Read Only Memory » en anglais) 403, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 404 ; et au moins une interface de communication 405.

Le processeur 401 est capable d'exécuter des instructions chargées dans la RAM 402 à partir de la ROM 403, d'une mémoire externe (non représentée), d'un support de stockage, tel qu'une carte SD, ou d'un réseau de communication (non représenté). Lorsque le dispositif nœud est mis sous tension, le processeur 401 est capable de lire de la RAM 402 des instructions et de les exécuter. Ces instructions forment un programme d'ordinateur causant la mise en œuvre, par le processeur 401, des comportements, étapes et algorithme décrits ici pour un dispositif nœud (notamment le programme de sélection et de commutation protocolaire).

Tout ou partie des comportements, étapes et algorithme décrits ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, le dispositif nœud comprend de la circuiterie électronique agencée et configurée pour implémenter les comportements, étapes et algorithmes décrits ici pour un tel dispositif nœud (notamment le programme de sélection et de commutation protocolaire).

Dans un mode de réalisation, le dispositif concentrateur possède une architecture matérielle identique à celle 400 d'un dispositif nœud. D'une manière générale, le dispositif concentrateur comprend de la circuiterie électronique agencée et configurée pour implémenter les comportements, étapes et algorithmes décrits ici pour un tel dispositif concentrateur.

### Principe général

La **Fig. 5** illustre schématiquement un exemple d'algorithme de configuration d'un protocole de communication courant d'un dispositif nœud (par exemple un compteur d'électricité communicant), pour communiquer avec un dispositif concentrateur via un réseau de communication implémenté sur un réseau d'alimentation électrique. Cet algorithme correspond à l'exécution, par le dispositif nœud, du programme de sélection et de commutation protocolaire mentionné plus haut (et référencé 301 sur la Fig. 3).

Dans une étape 501, le dispositif nœud détecte un évènement prédéterminé. Puis dans une étape 502, si l'évènement prédéterminé est détecté, le dispositif nœud commute de l'une des piles protocolaires à l'autre, afin de modifier le protocole de communication courant implémenté par le dispositif nœud.

Dans la suite de la description, on distingue deux types d'implémentation de cet algorithme :
- un premier type, dit de « commutation protocolaire automatique », dans lequel la commutation protocolaire est effectuée de façon automatique par le dispositif nœud (commutation décidée par le dispositif nœud) ; et
- un deuxième type, dit de « commutation protocolaire non-automatique », dans lequel la commutation protocolaire est effectuée de façon non-automatique par le dispositif nœud (commutation non-décidée par le dispositif nœud, mais décidée par le dispositif concentrateur).

Dans le cas d'une commutation protocolaire automatique, l'étape 501 de détection par le dispositif nœud d'un évènement prédéterminé comprend, dans un mode de réalisation : écouter le réseau de communication pour détecter le protocole de communication implémenté par le dispositif concentrateur ; et détecter si le protocole de communication courant implémenté par le dispositif nœud est différent du protocole de communication courant implémenté par le dispositif concentrateur. L'évènement prédéterminé est ici une détection que le protocole de communication courant implémenté par le dispositif nœud est différent du protocole de communication implémenté par le dispositif concentrateur. Dans un mode de réalisation, l'écoute du réseau de communication n'est effectuée que si le dispositif nœud ne s'est pas déjà enregistré auprès du réseau de communication en ayant utilisé le protocole de communication courant implémenté par le dispositif nœud.

Dans le cas d'une commutation protocolaire non-automatique, l'évènement prédéterminé est, dans un mode de réalisation, la réception par le dispositif nœud, via un canal de communication particulier du réseau de communication, d'une commande de commutation de protocole transmise par le dispositif concentrateur.

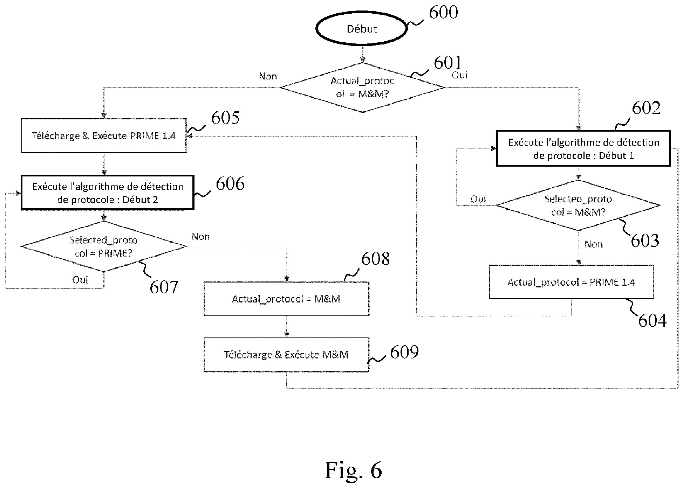

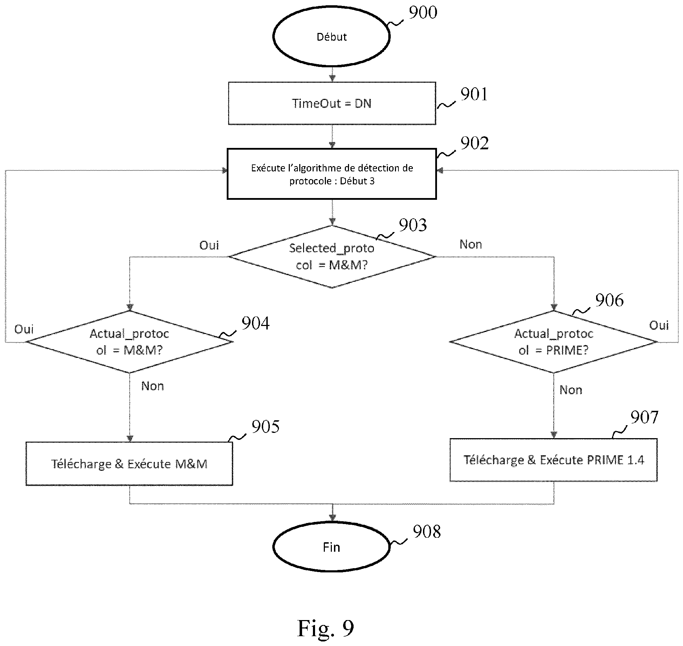

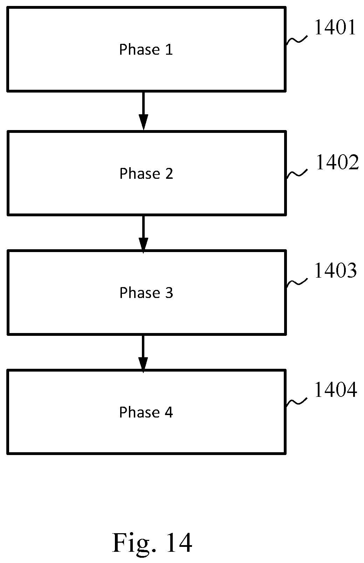

Dans la suite de la description, on présente :
- en relation avec les Figs. 6 à 8, une première implémentation particulière d'une commutation protocolaire automatique ;
- en relation avec les Figs. 9 à 13, une deuxième implémentation particulière d'une commutation protocolaire automatique ; et
- en relation avec la Fig. 14, une implémentation particulière d'une commutation protocolaire non-automatique.

### Première implémentation particulière d'une commutation protocolaire automatique

La **Fig. 6** illustre schématiquement un exemple d'algorithme de configuration d'un protocole de communication courant d'un dispositif nœud, dans une première implémentation particulière d'une commutation protocolaire automatique. Cet algorithme correspond à l'exécution, par le dispositif nœud, du programme de sélection et de commutation protocolaire mentionné plus haut et référencé 301 sur la Fig. 3.

Cet algorithme utilise les paramètres suivants :
- « Actual_protocol », qui définit le protocole de communication courant implémenté par le dispositif nœud (c'est-à-dire téléchargé depuis la mémoire flash et exécuté par le processeur applicatif 202 de la Fig. 2) ; et
- « Selected_protocol », qui définit le protocole sélectionné par appel à un autre algorithme, à savoir un algorithme de détection du protocole de communication implémenté par le dispositif concentrateur (appelé ci-après « algorithme de détection de protocole »).

Chacun des paramètres « Actual_protocol » et « Selected_protocol » peut prendre deux valeurs, à savoir : « M&M » pour indiquer le protocole de communication M&M et « PRIME 1.4 » pour indiquer le protocole de communication PRIME 1.4.

Par défaut, une des deux piles protocolaires est implémentée (téléchargée depuis la mémoire flash et exécutée) par le dispositif nœud au moment de son démarrage. C'est par exemple la pile protocolaire M&M, et on a dans ce cas par défaut : Actual_protocol = M&M. Ensuite, le choix de la pile protocolaire à implémenter (c'est-à-dire télécharger depuis la mémoire flash et exécuter) par le dispositif nœud se fait selon l'algorithme de commutation automatique de la Fig. 6.

Exemple : nous disposons d'un réseau de communication composé d'un dispositif concentrateur (ou BN, pour « Base Node » en anglais) et cinq dispositifs nœuds (compteurs d'électricité communicants, ou SN pour « Service Node » en anglais) qui communiquent entre eux en utilisant le protocole PRIME 1.4. Supposons que nous installons un nouveau compteur d'électricité à deux piles protocolaires M&M et PRIME 1.4. Le nouveau compteur d'électricité intègre et exécute la pile protocolaire M&M par défaut. Il lance l'algorithme de détection de détection de protocole. Après un premier délai (temporisation « MM_Discovery_timeout » décrite plus bas), n'ayant pas réussi à joindre un réseau de communication M&M (c'est-à-dire un réseau de communication sur lequel le dispositif concentrateur et les dispositifs nœuds communiquent selon le protocole M&M), le nouveau compteur d'électricité implémente (télécharge depuis la mémoire flash et exécute) la pile protocolaire PRIME 1.4. Finalement, avant la fin d'un deuxième délai (temporisation « PRIME_Discovery_timeout » décrite plus bas), ce nouveau compteur réussit à joindre le réseau de communication actuel PRIME 1.4.

Nous décrivons maintenant en détail l'algorithme de la Fig. 6.

Après lancement de l'algorithme (étape 600), le dispositif nœud détermine, dans une étape 601, le protocole de communication courant qu'il implémente en analysant la valeur du paramètre « Actual_protocol ».

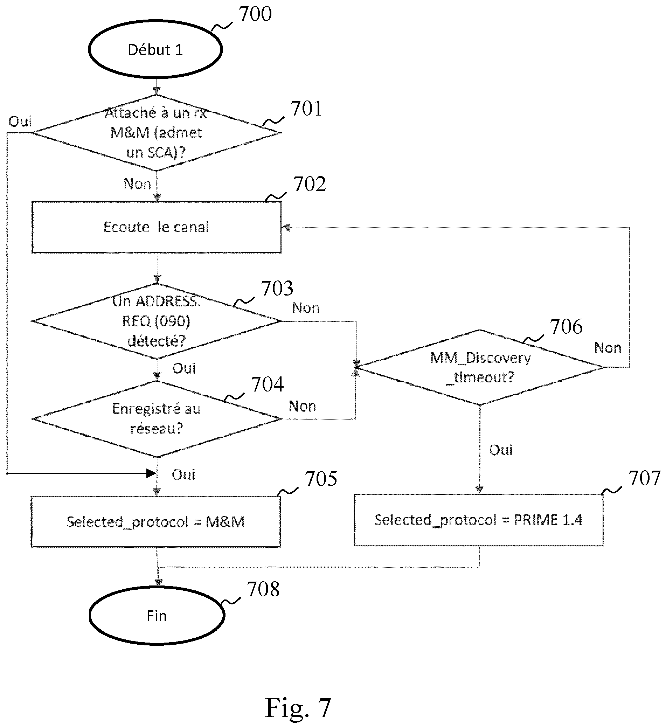

S'il résulte de l'étape 601 que le protocole de communication courant est le protocole M&M, le dispositif nœud passe à l'étape 602 dans laquelle il exécute un premier algorithme de détection de protocole, détaillé ci-dessous en relation avec la Fig. 7 et dont le résultat, c'est-à-dire le protocole sélectionné, est fourni par la valeur (« M&M » ou « PRIME 1.4 ») affectée au paramètre « Selected_protocol ». Dans une étape 603, le dispositif nœud analyse la valeur du paramètre « Selected_protocol » pour déterminer le protocole sélectionné à l'issue de l'étape 602. Si le protocole sélectionné est le protocole M&M, le dispositif nœud effectue à nouveau l'étape 602, afin de garantir une commutation automatique vers le protocole PRIME 1.4 en cas de perte de communication avec le protocole M&M en cours. Si le protocole sélectionné est le protocole PRIME 1.4, le dispositif nœud passe à l'étape 604 dans laquelle il affecte la valeur « PRIME 1.4 » au paramètre « Actual_protocol », puis à l'étape 605 de commutation protocolaire depuis le protocole M&M vers le protocole PRIME 1.4, et enfin aux étapes 606 et suivantes déjà décrites plus haut (afin de garantir une commutation automatique vers le protocole M&M en cas de perte de communication avec le protocole PRIME 1.4).

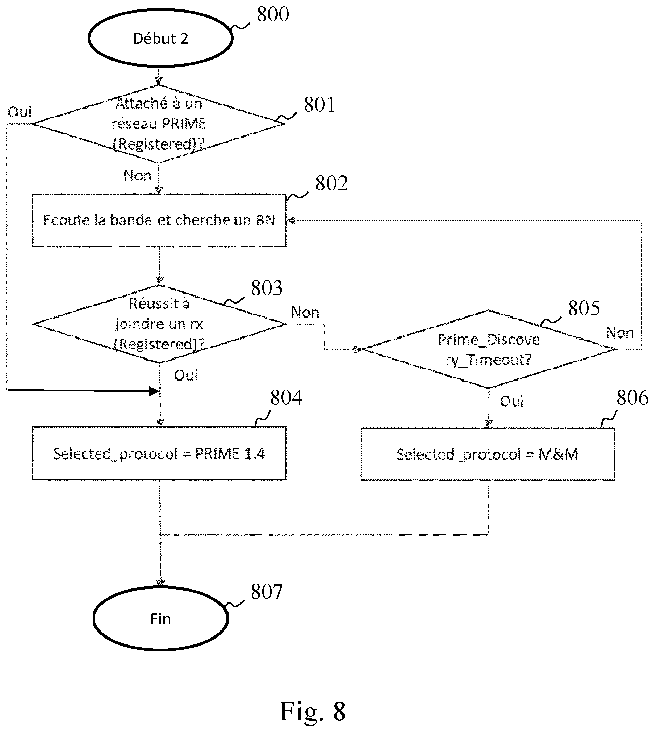

S'il résulte de l'étape 601 que le protocole de communication courant est le protocole PRIME 1.4, le dispositif nœud passe à l'étape 605 dans laquelle il implémente (télécharge depuis la mémoire flash et exécute) la pile protocolaire PRIME 1.4. Puis le dispositif nœud passe à l'étape 606 dans laquelle il exécute un deuxième algorithme de détection de protocole, détaillé ci-dessous en relation avec la Fig. 8 et dont le résultat, c'est-à-dire le protocole sélectionné, est fourni par la valeur (« M&M » ou « PRIME 1.4 ») affectée au paramètre « Selected_protocol ». Dans une étape 607, le dispositif nœud analyse la valeur du paramètre « Selected_protocol » pour déterminer le protocole sélectionné à l'issue de l'étape 606. Si le protocole sélectionné est le protocole PRIME 1.4, le dispositif nœud effectue à nouveau l'étape 606, afin de garantir une commutation automatique vers le protocole M&M en cas de perte de communication avec le protocole PRIME 1.4 en cours. Si le protocole sélectionné est le protocole M&M, le dispositif nœud passe à l'étape 608 dans laquelle il affecte la valeur « M&M » au paramètre « Actual_protocol », puis à l'étape 609 dans laquelle il implémente (télécharge depuis la mémoire flash et exécute) la pile protocolaire M&M (commutation protocolaire depuis le protocole PRIME 1.4 vers le protocole M&M), et enfin aux étapes 602 et suivantes déjà décrites plus haut (afin de garantir une commutation automatique vers le protocole PRIME 1.4 en cas de perte de communication avec le protocole M&M).

La **Fig. 7** est un détail de l'étape 602 de la Fig. 6 et illustre schématiquement un exemple d'algorithme de détection du protocole implémenté par le dispositif concentrateur, dans le cas où le protocole courant implémenté par le dispositif nœud est le protocole M&M (Actual_protocol = M&M).

Cet algorithme utilise le paramètre « MM_Discovery_Timeout », qui est une temporisation définissant la durée pendant laquelle le dispositif nœud doit essayer de rejoindre un réseau de communication M&M avant de tenter de joindre un réseau de communication PRIME 1.4.

Après lancement de l'algorithme (étape 700), le dispositif nœud détermine, dans une étape 701, s'il est attaché à un réseau de communication M&M, c'est-à-dire s'il est enregistré sur ce réseau, admettant ainsi un SCA (Section Communication Address).

S'il résulte de l'étape 701 qu'il est attaché à un réseau de communication M&M, le dispositif nœud passe directement à l'étape 705 dans laquelle il affecte la valeur « M&M » au paramètre « Selected_protocol », avant de passer à l'étape de fin 708 (correspondant à la fin de l'étape 602 de la Fig. 6).

S'il résulte de l'étape 701 qu'il n'est pas déjà attaché à un réseau de communication M&M, le dispositif nœud passe à l'étape 702 dans laquelle, selon la spécification M&M, il fonctionne en tant qu'esclave et écoute (scanne) le canal de fréquence CEN-A (CENELEC A), jusqu'à la détection (étape de test 703) d'un message de signalisation ADDRESS.REQ (090) (provenant soit du dispositif concentrateur soit d'un autre dispositif nœud implémentant le protocole de communication M&M), sous réserve (étape de test 706) que la durée « MM_Discovery_Timeout » ne soit pas écoulée depuis le lancement de l'algorithme (étape 700). En cas de détection d'un message de signalisation ADDRESS.REQ (090) (réponse « oui » au test de l'étape 703), le dispositif nœud passe à l'étape 704 dans laquelle il détecte s'il a réussi à s'enregistrer sur un réseau de communication M&M. S'il a réussi à s'enregistrer sur un réseau de communication M&M (réponse « oui » au test de l'étape 704), le dispositif nœud passe à l'étape 705 déjà décrite plus haut. S'il n'a pas réussi à détecter un message de signalisation ADDRESS.REQ (090) (réponse « non » au test de l'étape 703), ou s'il n'a pas réussi à s'enregistrer sur un réseau de communication M&M (réponse « non » au test de l'étape 704), le dispositif nœud passe à l'étape 706 dans laquelle il détecte si la durée « MM_Discovery_Timeout » est écoulée depuis le lancement de l'algorithme (étape 700). Si la durée « MM_Discovery_Timeout » n'est pas écoulée, le dispositif nœud revient à l'étape 702 ; sinon, il exécute l'étape 707 dans laquelle il affecte la valeur « PRIME 1.4 » au paramètre « Selected_protocol », avant de passer à l'étape de fin 708 (correspondant à la fin de l'étape 602 de la Fig. 6).

La **Fig. 8** est un détail de l'étape 606 de la Fig. 6 et illustre schématiquement un exemple d'algorithme de détection du protocole implémenté par le dispositif concentrateur, dans le cas où le protocole courant implémenté par le dispositif nœud est le protocole PRIME 1.4 (Actual_protocol = PRIME 1.4).

Cet algorithme utilise le paramètre « PRIME_Discovery_Timeout », qui une temporisation définissant la durée pendant laquelle le dispositif nœud doit essayer de rejoindre un réseau de communication PRIME avant de tenter de joindre un réseau de communication M&M.

Après lancement de l'algorithme (étape 800), le dispositif nœud détermine, dans une étape 801, s'il est attaché à un réseau de communication PRIME 1.4, c'est-à-dire s'il est enregistré sur ce réseau.

S'il résulte de l'étape 801 qu'il est attaché à un réseau de communication PRIME 1.4, le dispositif nœud passe directement à l'étape 804 dans laquelle il affecte la valeur « PRIME 1.4 » au paramètre « Selected_protocol », avant de passer à l'étape de fin 807 (correspondant à la fin de l'étape 606 de la Fig. 6).

S'il résulte de l'étape 801 qu'il n'est pas déjà attaché à un réseau de communication PRIME 1.4, le dispositif nœud passe à l'étape 802 dans laquelle, selon la spécification PRIME 1.4, il scanne les différents canaux de fréquences (de CH1 jusqu'à CH8) jusqu'à réussir à joindre (s'enregistrer sur) un réseau PRIME 1.4 (« State = Registered »), sous réserve (étape de test 805) que la durée « PRIME_Discovery_Timeout » ne soit pas écoulée depuis le lancement de l'algorithme (étape 7800). Dans une étape 803, le dispositif nœud détecte s'il a réussi à s'enregistrer sur un réseau de communication PRIME 1.4. S'il a réussi à s'enregistrer sur un réseau de communication PRIME 1.4 (réponse « oui » au test de l'étape 803), le dispositif nœud passe à l'étape 804 déjà décrite plus haut. S'il n'a pas réussi à s'enregistrer sur un réseau de communication PRIME 1.4 (réponse « non » au test de l'étape 803), le dispositif nœud passe à l'étape 706 dans laquelle il détecte si la durée « PRIME_Discovery_Timeout » est écoulée depuis le lancement de l'algorithme (étape 800). Si la durée « PRIME_Discovery_Timeout » n'est pas écoulée, le dispositif nœud revient à l'étape 802 ; sinon, il exécute l'étape 806 dans laquelle il affecte la valeur « M&M » au paramètre « Selected_protocol », avant de passer à l'étape de fin 807 (correspondant à la fin de l'étape 606 de la Fig. 6).

En d'autres termes, dans l'algorithme de la Fig. 7 comme dans celui de la Fig. 8, pour détecter le protocole de communication implémenté par le dispositif concentrateur, le dispositif nœud détecte (étapes 702 à 707 de la Fig. 7 et étapes 802 à 806 de la Fig. 8) si, avant l'écoulement d'une temporisation (« MM_Discovery_Timeout » sur la Fig. 7 et « PRIME_Discovery_Timeout » sur la Fig. 8), il a réussi à s'enregistrer auprès du réseau de communication en utilisant le protocole de communication courant implémenté par le dispositif nœud. S'il a réussi cet enregistrement, il en conclut que le protocole de communication implémenté par le dispositif concentrateur est identique au protocole de communication courant implémenté par le dispositif nœud. S'il n'a pas réussi cet enregistrement, il en tire la conclusion inverse.

### Deuxième implémentation particulière d'une commutation protocolaire automatique

La **Fig. 9** illustre schématiquement un exemple d'algorithme de configuration d'un protocole de communication courant d'un dispositif nœud, dans une deuxième implémentation particulière d'une commutation protocolaire automatique. Cet algorithme correspond à l'exécution, par le dispositif nœud, du programme de sélection et de commutation protocolaire mentionné plus haut et référencé 301 sur la Fig. 3.

Cet algorithme utilise les paramètres « Actual_protocol » et « Selected_protocol » déjà définis plus haut, ainsi que le paramètre « TimeOut » qui est une temporisation définissant la durée pendant laquelle le dispositif nœud est considéré appartenant à un réseau de communication M&M ou PRIME 1.4 (quand cette temporisation est écoulée le dispositif nœud doit essayer de rejoindre un nouveau réseau de communication (PRIME 1.4 ou M&M).

Cet algorithme est exécuté en arrière-plan (selon des critères et occurrence prédéfinis) afin de détecter tout changement dans le réseau. Il ne dépend pas du protocole de communication courant implémenté sur le dispositif nœud.

Après lancement de l'algorithme (étape 900), le dispositif nœud initialise, dans une étape 901, le paramètre (temporisation) « TimeOut » avec une valeur DN (durée programmable durant laquelle le dispositif nœud est compté appartenant à un réseau). Le paramètre « TimeOut » est par la suite réinitialisé avec cette valeur DN après chaque activité réussie de la part du dispositif nœud (réception ou transmission de trame acquittée).

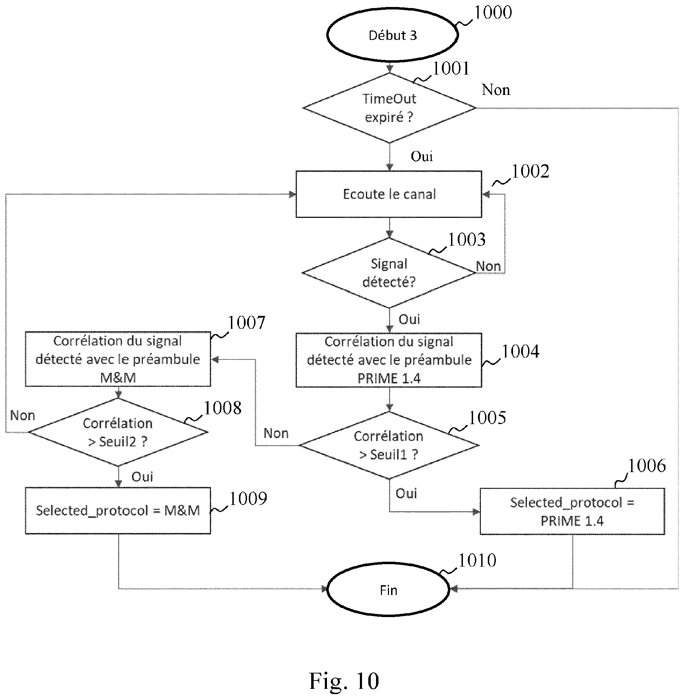

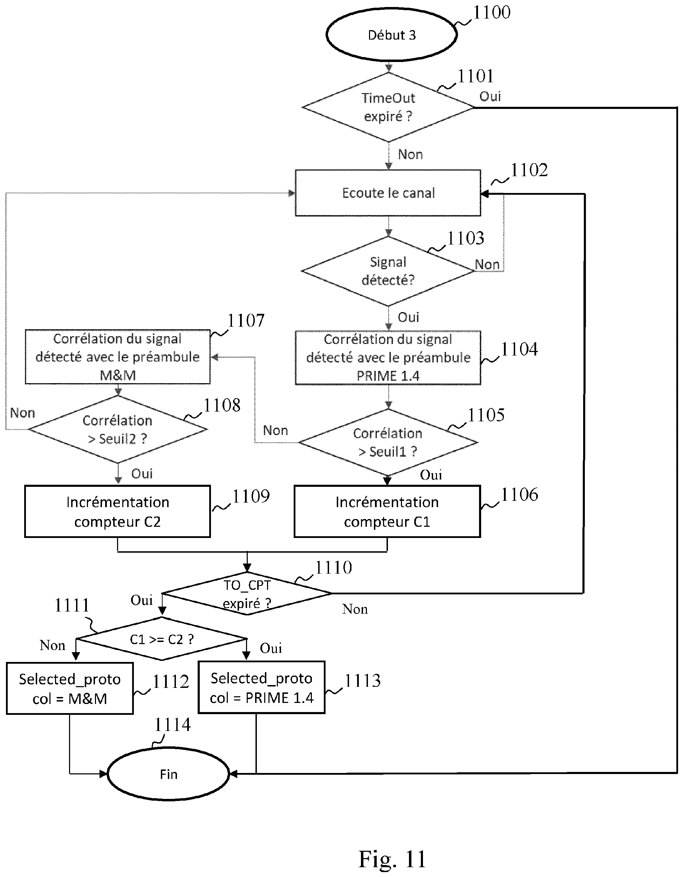

Puis, le dispositif nœud passe à l'étape 902 dans laquelle il exécute un algorithme de détection de protocole, détaillé ci-dessous en relation avec la Fig. 10 (une variante est également présentée en relation avec la Fig. 11) et dont le résultat, c'est-à-dire le protocole sélectionné, est fourni par la valeur (« M&M » ou « PRIME 1.4 ») affectée au paramètre « Selected_protocol ». Dans une étape 903, le dispositif nœud analyse la valeur du paramètre « Selected_protocol » pour déterminer le protocole sélectionné à l'issue de l'étape 902.

S'il résulte de l'étape 903 que le protocole sélectionné est le protocole M&M, le dispositif nœud effectue l'étape 904 pour déterminer si le protocole de communication courant implémenté par le dispositif nœud est le protocole M&M ou le protocole PRIME 1.4. Si c'est le protocole M&M, le dispositif nœud exécute à nouveau l'étape 902 afin de garantir une commutation automatique vers le protocole PRIME 1.4 en cas de perte de communication avec le protocole M&M en cours. Si c'est le protocole PRIME 1.4, le dispositif nœud exécute l'étape 905 dans laquelle il implémente (télécharge depuis la mémoire flash et exécute) la pile protocolaire M&M (commutation protocolaire depuis le protocole PRIME 1.4 vers le protocole M&M), puis il passe à l'étape de fin 908.

S'il résulte de l'étape 903 que le protocole sélectionné est le protocole PRIME 1.4, le dispositif nœud effectue l'étape 906 pour déterminer si le protocole de communication courant implémenté par le dispositif nœud est le protocole M&M ou le protocole PRIME 1.4. Si c'est le protocole PRIME 1.4, le dispositif nœud exécute à nouveau l'étape 902 afin de garantir une commutation automatique vers le protocole M&M en cas de perte de communication avec le protocole PRIME 1.4 en cours. Si c'est le protocole M&M, le dispositif nœud exécute l'étape 907 dans laquelle il implémente (télécharge depuis la mémoire flash et exécute) la pile protocolaire PRIME 1.4 (commutation protocolaire depuis le protocole M&M vers le protocole PRIME 1.4), puis il passe à l'étape de fin 908.

La **Fig. 10** est un détail de l'étape 902 de la Fig. 9 et illustre schématiquement un premier exemple d'algorithme de détection du protocole implémenté par le dispositif concentrateur.

Cet algorithme utilise les paramètres supplémentaires suivants :
- « Seuil1 » : valeur programmable correspondant à un premier seuil qui indique la détection d'un signal PRIME 1.4, dans le cas où la corrélation entre le signal reçu et le préambule sauvegardé du PRIME 1.4 dépasse ce premier seuil ; et
- « Seuil2 » : valeur programmable correspondant à un deuxième seuil qui indique la détection d'un signal M&M, dans le cas où la corrélation entre le signal reçu et le préambule sauvegardé du M&M dépasse ce deuxième seuil.

Après lancement de l'algorithme (étape 1000), le dispositif nœud exécute l'étape 1001 dans laquelle il détecte si la temporisation « TimeOut » est expirée. Si la temporisation « TimeOut » n'est pas expirée, le dispositif nœud passe directement à l'étape de fin 1010. Si la temporisation « TimeOut » est expirée, le dispositif nœud écoute un canal de transmission du réseau de communication afin de détecter un signal reçu, et plus précisément une trame reçue. Si aucune trame n'est reçue à l'étape 1003, le dispositif nœud exécute à nouveau l'étape 1002.

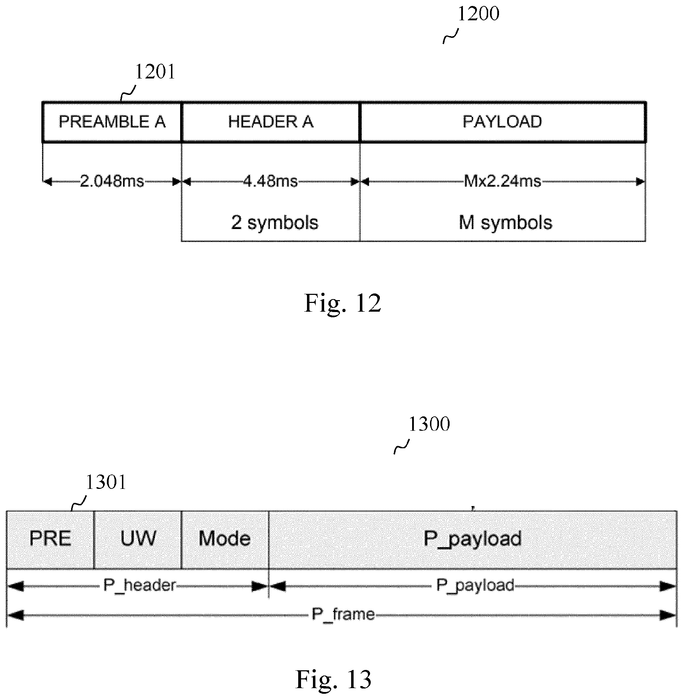

Si une trame est reçue à l'étape 1003, le dispositif nœud effectue, dans les étapes 1004 et suivantes, une analyse du préambule de cette trame afin d'en déduire le protocole implémenté par le dispositif concentrateur. Plus précisément, dans l'étape 1004, le dispositif nœud effectue une première corrélation entre le préambule de la trame reçue et un premier préambule de référence d'une première trame de référence selon les spécifications PRIME 1.4. La première trame de référence est par exemple une trame de type A PRIME 1.4 (ou trame balise « Beacon » du protocole PRIME 1.4), illustrée schématiquement et référencée 1200 sur la **Fig. 12****,** et qui comprend un préambule 1201 qui constitue le premier préambule de référence.

Puis le dispositif nœud exécute l'étape 1005 dans laquelle il vérifie si le résultat de la première corrélation de l'étape 1004 est supérieur au premier seuil « Seuil1 ». Si le résultat de la première corrélation est supérieur au premier seuil « Seuil1 », le dispositif nœud exécute l'étape 1006 dans laquelle il affecte la valeur « PRIME 1.4 » au paramètre « Selected_protocol », avant de passer à l'étape de fin 1010 (correspondant à la fin de l'étape 902 de la Fig. 9). Si le résultat de la première corrélation n'est pas supérieur au premier seuil « Seuil1 », le dispositif nœud exécute l'étape 1007 dans laquelle il effectue une deuxième corrélation entre le préambule de la trame reçue et un deuxième préambule de référence d'une deuxième trame de référence selon les spécifications M&M. Cette deuxième trame de référence est par exemple une trame physique M&M (par exemple une trame « ADDRESS.REQ (090) » du protocole M&M), illustrée schématiquement et référencée 1300 sur la **Fig. 13****,** et qui comprend un préambule 1301 qui constitue le deuxième préambule de référence.

Puis le dispositif nœud exécute l'étape 1008 dans laquelle il vérifie si le résultat de la deuxième corrélation de l'étape 1007 est supérieur au deuxième seuil « Seuil2 ». Si le résultat de la deuxième corrélation est supérieur au deuxième seuil « Seuil2 », le dispositif nœud exécute l'étape 1009 dans laquelle il affecte la valeur « M&M » au paramètre « Selected_protocol », avant de passer à l'étape de fin 1010 (correspondant à la fin de l'étape 902 de la Fig. 9). Si le résultat de la deuxième corrélation n'est pas supérieur au deuxième seuil « Seuil2 », le dispositif nœud exécute à nouveau l'étape 1002.

La **Fig. 11** est un détail de l'étape 902 de la Fig. 9 et illustre schématiquement un deuxième exemple d'algorithme de détection du protocole implémenté par le dispositif concentrateur (variante du premier exemple illustré sur la Fig. 10).

Après l'étape de début 1100, les étapes 1101 à 1105 sont identiques aux étapes 1001 à 1005 de la Fig. 10, et ne sont donc pas décrites à nouveau.

Si le test de l'étape 1105 indique que le résultat de la première corrélation est supérieur au premier seuil « Seuil1 », le dispositif nœud exécute l'étape 1106 dans laquelle il incrémente d'une unité un premier compteur (de trames) C1 associé au protocole PRIME 1.4 puis il passe à l'étape 1110 décrite plus bas.

Si le test de l'étape 1105 indique que le résultat de la première corrélation n'est pas supérieur au premier seuil « Seuil1 », le dispositif nœud exécute les étapes 1107 et 1108 qui sont identiques aux étapes 1007 et 1008 de la Fig. 10, puis il exécute l'étape 1109 dans laquelle il incrémente d'une unité un deuxième compteur (de trames) C2 associé au protocole M&M puis il passe à l'étape 1110 décrite plus bas.

Dans l'étape 1110, le dispositif nœud détecte si une temporisation « TO_CPT » est expirée. Si la temporisation « TO_CPT » n'est pas expirée, le dispositif nœud exécute à nouveau les étapes 1102 et suivantes (afin de détecter et compter une autre trame M&M ou PRIME 1.4). Si la temporisation « TO_CPT » est expirée, le dispositif nœud passe à l'étape 1111 dans laquelle il compare les valeurs des compteurs C1 et C2. Si la valeur du compteur C1 est supérieure ou égale à celle du compteur C2, le dispositif nœud exécute l'étape 1113 dans laquelle dans laquelle il affecte la valeur « PRIME 1.4 » au paramètre « Selected_protocol », avant de passer à l'étape de fin 1114 (correspondant à la fin de l'étape 902 de la Fig. 9). Si la valeur du compteur C1 est inférieure à celle du compteur C2, le dispositif nœud exécute l'étape 1112 dans laquelle dans laquelle il affecte la valeur « M&M » au paramètre « Selected_protocol », avant de passer à l'étape de fin 1114

Ainsi, dans le premier exemple illustré sur la Fig. 10, dès qu'une trame de référence est reçue (par exemple une trame « Beacon » du protocole PRIME 1.4 ou une trame « ADDRESS.REQ (090) » du protocole M&M), le dispositif nœud sélectionne immédiatement le protocole de communication détecté.

Dans le deuxième exemple illustré sur la Fig. 11, on fixe un délai (temporisation « TO_CPT ») pour la procédure de détection de trame, et deux compteurs de trame C1 et C2 (un pour chaque protocole, MM ou PRIME 1.4) sont lancés au début de l'algorithme. Ces deux compteurs sont incrémentés à chaque fois qu'un préambule d'une trame du protocole correspondant est détecté. Après écoulement du délai fixé, le dispositif nœud choisit de s'attacher au réseau implémentant le protocole pour lequel le nombre de trames reçues est le plus élevé. Ceci permet de sélectionner le réseau le plus fiable, admettant le plus de dispositifs nœuds voisins, avec le moins de perte de communication.

### Implémentation particulière d'une commutation protocolaire non-automatique

La **Fig. 14** illustre schématiquement un algorithme de réalisation d'une mise à jour d'un réseau de communication comportant un dispositif concentrateur et une pluralité de dispositifs nœuds, dans un mode de réalisation (cas d'une commutation protocolaire non-automatique).

A titre d'exemple, par mise à jour du réseau de communication, on entend une migration de protocole permettant de mettre en place un réseau PRIME 1.4 à partir d'un réseau original M&M, sans perte de communication entre le dispositif concentrateur et les dispositifs nœuds. Comme illustré sur la Fig. 14, dans cet exemple, l'algorithme (procédure de migration) comprend quatre phases et utilise le principe de commutation protocolaire dans les dispositifs nœuds comprenant deux piles protocolaires (comme décrit plus haut).

Dans une phase 1 (référencée 1401), tous les dispositifs nœuds (compteurs d'électricités) installés sur le terrain fonctionnent avec la pile protocolaire M&M.

Dans une phase 2 (référencée 1402), un nouveau dispositif nœud (compteur d'électricité) à double pile protocolaire M&M et PRIME est installé sur le terrain, mais il est configuré par défaut avec la pile protocolaire M&M. Au cours de cette phase 2, le nouveau dispositif nœud fonctionne de manière transparente avec tous les anciens dispositifs nœuds.

Dans une phase 3 (référencée 1403), l'ancien dispositif concentrateur M&M est remplacé par un nouveau dispositif concentrateur qui intègre la double pile protocolaire et fonctionne par défaut avec la pile protocolaire M&M. Le management des dispositifs concentrateurs se fait par exemple par le HES (Head End System).

Dans une phase 4 (référencée 1404), après avoir remplacé tous les anciens dispositifs nœuds par les nouveaux dispositifs nœuds à double pile protocolaire, le nouveau dispositif concentrateur envoie une commande à tous les dispositifs nœuds pour passer au nouveau protocole PRIME 1.4 avec un canal de communication particulier (par exemple : CH5). Conformément à cette commande, tous les dispositifs nœuds et le dispositif concentrateur passent au protocole PRIME 1.4 (commutation de protocole depuis M&M vers PRIME 1.4) en formant un réseau PRIME 1.4. Cette procédure de migration s'effectue donc via une configuration à distance (avec la commande envoyée par le nouveau dispositif concentrateur) sans nécessiter d'intervention sur le terrain, permettant ainsi un processus de migration et de commutation protocolaire rapide et fluide.

L'algorithme de réalisation d'une mise à jour d'un réseau de communication (correspondant par exemple à une migration de protocole) peut ainsi être résumé comme suit :
- avant mise à jour du (nouveau) dispositif concentrateur (c'est-à-dire avant commutation protocolaire du dispositif concentrateur, par exemple depuis le protocole M&M vers le protocole PRIME 1.4 ou inversement), le dispositif concentrateur implémente (voir étapes 1401, 1402 et 1403) un premier protocole de communication (par exemple M&M) pour communiquer avec des dispositifs nœuds, parmi la pluralité de dispositifs nœuds, qui se sont enregistrés auprès de lui en utilisant ce premier protocole de communication ;
- après mise à jour du dispositif concentrateur, le dispositif concentrateur implémente (voir étape 1404) le deuxième protocole de communication (par exemple PRIME 1.4) pour communiquer avec des dispositifs nœuds, parmi la pluralité de dispositifs nœuds, qui se sont enregistrés auprès de lui en utilisant ce deuxième protocole de communication ; et
- par exécution du procédé de commutation de protocole décrit plus haut (dans l'un quelconque de ses différents modes de réalisation), chaque dispositif nœud enregistré auprès du dispositif concentrateur en utilisant le premier protocole de communication commute de pile protocolaire (voir étape 1404), afin de modifier le protocole de communication courant implémenté par le dispositif nœud vers le deuxième protocole de communication (par exemple commutation depuis M&M

## Revendications

1. Procédé de configuration d'un protocole de communication courant d'un dispositif nœud (130 à 139), pour communiquer avec un dispositif concentrateur (110) via un réseau de communication (121) implémenté sur un réseau d'alimentation électrique, **caractérisé en ce que** le procédé est implémenté par le dispositif nœud qui comprend de la circuiterie électronique (400) et stocke deux piles protocolaires (302, 303), chaque pile protocolaire permettant, quand elle est exécutée par la circuiterie électronique du dispositif nœud, d'implémenter un protocole distinct de communication avec le dispositif concentrateur sur le réseau de communication, et **en ce que** le procédé comprend :
- détecter (501) un évènement prédéterminé ; et
- si ledit évènement est détecté, commuter (502) de l'une des piles protocolaires à l'autre, afin de modifier le protocole de communication courant implémenté par le dispositif nœud.

2. Procédé selon la revendication 1, dans lequel le dispositif nœud (130 à 139) est un compteur communicant.

3. Procédé selon l'une quelconque des revendications 1 et 2, dans lequel l'une des piles protocolaires (303) permet d'implémenter le protocole de communication PRIME, pour « PoweRline Intelligent Metering Evolution », et l'autre des piles protocolaires (302) permet d'implémenter le protocole de communication M&M, pour « Meters & More ».

4. Procédé selon l'une quelconque des revendications 1 à 3, dans lequel la détection d'un évènement prédéterminé comprend :
- écouter le réseau de communication pour détecter (602, 606 ; 902) le protocole de communication implémenté par le dispositif concentrateur ; et
- détecter (603, 607) si le protocole de communication courant implémenté par le dispositif nœud est différent du protocole de communication courant implémenté par le dispositif concentrateur ;
et dans lequel l'évènement prédéterminé est une détection que le protocole de communication courant implémenté par le dispositif nœud est différent du protocole de communication implémenté par le dispositif concentrateur.

5. Procédé selon la revendication 4, dans lequel l'écoute du réseau de communication n'est effectuée que si (701 ; 801) le dispositif nœud ne s'est pas déjà enregistré auprès du réseau de communication en ayant utilisé le protocole de communication courant implémenté par le dispositif nœud.

6. Procédé selon l'une quelconque des revendications 4 et 5, dans lequel l'écoute du réseau de communication pour détecter le protocole de communication implémenté par le dispositif concentrateur comprend :
- détecter (702 à 707 ; 802 à 806) si, avant l'écoulement d'une première temporisation, le dispositif nœud a réussi à s'enregistrer auprès du réseau de communication en utilisant le protocole de communication courant implémenté par le dispositif nœud ; et
- détecter le protocole de communication implémenté par le dispositif concentrateur comme étant :
∘ identique au protocole de communication courant implémenté par le dispositif nœud si, avant l'écoulement de la première temporisation, le dispositif nœud a réussi à s'enregistrer auprès du réseau de communication ;
∘ différent du protocole de communication courant implémenté par le dispositif nœud si, avant l'écoulement de la première temporisation, le dispositif nœud n'a pas réussi à s'enregistrer auprès du réseau de communication.

7. Procédé selon l'une quelconque des revendications 4 et 5, dans lequel l'écoute du réseau de communication pour détecter le protocole de communication implémenté par le dispositif concentrateur comprend :
- détecter (1002, 1003) une trame reçue via le réseau de communication ;
- analyser (1004, 1005, 1007, 1008) un préambule de la trame reçue ; et
- en fonction de la structure du préambule de la trame reçue, détecter (1006, 1009) le protocole de communication implémenté par le dispositif concentrateur.

8. Procédé selon l'une quelconque des revendications 4 et 5, dans lequel l'écoute du réseau de communication pour détecter le protocole de communication implémenté par le dispositif concentrateur comprend :
- déclencher une deuxième temporisation ;
- pendant la deuxième temporisation, à chaque détection d'une trame reçue via le réseau de communication :
∘ analyser (1104, 1105, 1107, 1108) un préambule de la trame reçue ; et
∘ en fonction de la structure du préambule de la trame reçue, incrémenter (1106) un premier compteur associé à un premier protocole de communication, si la structure du préambule de la trame reçue correspond à une trame selon ledit premier protocole de communication ou incrémenter (1109) un deuxième compteur associé à un deuxième protocole de communication, si la structure du préambule de la trame reçue correspond à une trame selon le deuxième protocole de communication ;
- après écoulement (1110) de la deuxième temporisation, détecter (1111, 1112, 1113) le protocole de communication implémenté par le dispositif concentrateur comme étant le protocole associé à celui des premier et deuxième compteurs possédant la valeur la plus grande.

9. Procédé selon l'une quelconque des revendications 1 à 3, dans lequel l'évènement prédéterminé est la réception (1404) par le dispositif nœud, via un canal de communication particulier du réseau de communication, d'une commande de commutation de protocole transmise par le dispositif concentrateur.

10. Dispositif nœud (130 à 139) configuré pour communiquer avec un dispositif concentrateur (110) via un réseau de communication (121) implémenté sur un réseau d'alimentation électrique, le dispositif nœud stockant deux piles protocolaires (302, 303) et comprenant de la circuiterie électronique (400) configurée pour implémenter le procédé selon l'une quelconque des revendications 1 à 9.

11. Produit programme d'ordinateur, comportant des instructions entraînant l'exécution, par un processeur (401), du procédé selon l'une quelconque des revendications 1 à 9, lorsque lesdites instructions sont exécutées par le processeur.

12. Support de stockage (403), stockant un programme d'ordinateur comportant des instructions entraînant l'exécution, par un processeur (401), du procédé selon l'une quelconque des revendications 1 à 9, lorsque lesdites instructions sont lues et exécutées par le processeur.

13. Procédé de réalisation d'une mise à jour d'un réseau de communication comportant un dispositif concentrateur (110) et une pluralité de dispositifs nœuds (130 à 139), chaque dispositif nœud comprenant de la circuiterie électronique (400) configurée pour implémenter le procédé selon l'une quelconque des revendications 1 à 9, chaque dispositif nœud stockant deux piles protocolaires (302, 303) permettant chacune d'implémenter un protocole distinct de communication parmi des premier et deuxième protocoles de communication, **caractérisé en ce que** :
- avant mise à jour du dispositif concentrateur, le dispositif concentrateur implémente (1401 à 1403) le premier protocole de communication pour communiquer avec des dispositifs nœuds, parmi lesdits dispositifs nœuds, qui se sont enregistrés auprès de lui en utilisant le premier protocole de communication ;
- après mise à jour du dispositif concentrateur, le dispositif concentrateur implémente (1404) le deuxième protocole de communication pour communiquer avec des dispositifs nœuds, parmi lesdits dispositifs nœuds, qui se sont enregistrés auprès de lui en utilisant le deuxième protocole de communication ; et
- par exécution du procédé selon l'une quelconque des revendications 1 à 9, chaque dispositif nœud enregistré auprès du dispositif concentrateur en utilisant le premier protocole de communication commute (1404) de pile protocolaire, afin de modifier le protocole de communication courant implémenté par le dispositif nœud vers le deuxième protocole de communication.

14. Système de mise à jour d'un réseau de communication comportant un dispositif concentrateur (110) et une pluralité de dispositifs nœuds (130 à 139), chaque dispositif nœud comprenant de la circuiterie électronique (400) configurée pour implémenter le procédé selon l'une quelconque des revendications 1 à 9, chaque dispositif nœud stockant deux piles protocolaires (302, 303) permettant chacune d'implémenter un protocole distinct de communication parmi des premier et deuxième protocoles de communication,
**caractérisé en ce que** le dispositif concentrateur (110) comprend de la circuiterie électronique (400) configurée pour :
- avant mise à jour du dispositif concentrateur, implémenter (1401 à 1403) le premier protocole de communication pour communiquer avec des dispositifs nœuds, parmi lesdits dispositifs nœuds, qui se sont enregistrés auprès de lui en utilisant le premier protocole de communication ; et
- après mise à jour du dispositif concentrateur, implémenter (1404) le deuxième protocole de communication pour communiquer avec des dispositifs nœuds, parmi lesdits dispositifs nœuds, qui se sont enregistrés auprès de lui en utilisant le deuxième protocole de communication ;
et **en ce que** la circuiterie électronique (400) de chaque dispositif nœud (130 à 139) est configurée pour, après mise à jour du dispositif concentrateur :
- si ledit dispositif nœud est enregistré auprès du dispositif concentrateur en utilisant le premier protocole de communication, exécuter le procédé selon l'une quelconque des revendications 1 à 9 pour commuter (1404) de l'une des piles protocolaires à l'autre, afin de modifier le protocole de communication courant implémenté par le dispositif nœud vers le deuxième protocole de communication.

## Patentansprüche

1. Verfahren zur Konfiguration eines aktuellen Kommunikationsprotokolls einer Knotenvorrichtung (130 bis 139) zum Kommunizieren mit einer Konzentratorvorrichtung (110) über ein Kommunikationsnetzwerk (121), das auf einem Stromversorgungsnetz implementiert wird, **dadurch gekennzeichnet, dass** das Verfahren von der Knotenvorrichtung implementiert wird, die eine elektronische Schaltungsanordnung (400) umfasst und zwei Protokollstapel (302, 303) speichert, wobei es jeder Protokollstapel, wenn er von der elektronischen Schaltungsanordnung der Knotenvorrichtung ausgeführt wird, erlaubt, ein unterschiedliches Kommunikationsprotokoll mit der Konzentratorvorrichtung auf dem Kommunikationsnetzwerk zu implementieren, und dass das Verfahren Folgendes umfasst:
- Erfassen (501) eines vorbestimmten Ereignisses; und
- falls das Ereignis erfasst wird, Umschalten (502) von einem der Protokollstapel auf den anderen, um das von der Knotenvorrichtung implementierte aktuelle Kommunikationsprotokoll zu ändern.

2. Verfahren nach Anspruch 1, wobei die Knotenvorrichtung (130 bis 139) ein kommunikationsfähiger Zähler ist.

3. Verfahren nach einem der Ansprüche 1 und 2, wobei einer der Protokollstapel (303) das Implementieren des Kommunikationsprotokolls PRIME, für "PoweRline Intelligent Metering Evolution", erlaubt, und der andere der Protokollstapel (302) das Implementieren des Kommunikationsprotokolls M&M, für "Meters & More", erlaubt.

4. Verfahren nach einem der Ansprüche 1 bis 3, wobei die Erfassung eines vorbestimmten Ereignisses Folgendes umfasst:
- Abhören des Kommunikationsnetzwerks, um das von der Konzentratorvorrichtung implementierte Kommunikationsprotokoll zu erfassen (602, 606; 902); und
- Erfassen (603, 607), ob sich das aktuelle von der Knotenvorrichtung implementierte Kommunikationsprotokoll von dem aktuellen von dem von der Konzentratorvorrichtung implementierten Kommunikationsprotokoll unterscheidet;
und wobei das vorbestimmte Ereignis eine Erfassung ist, dass sich das aktuelle von der Knotenvorrichtung implementierte Kommunikationsprotokoll von dem von der Konzentratorvorrichtung implementierten Kommunikationsprotokoll unterscheidet.

5. Verfahren nach Anspruch 4, wobei das Abhören des Kommunikationsnetzwerks nur ausgeführt wird, wenn (701; 801) sich die Knotenvorrichtung nicht bereits bei dem Kommunikationsnetzwerk unter Verwendung des aktuellen von der Knotenvorrichtung implementierten Kommunikationsprotokolls angemeldet hat.

6. Verfahren nach einem der Ansprüche 4 und 5, wobei das Abhören des Kommunikationsnetzwerks zum Erfassen des von der Konzentratorvorrichtung implementierten Kommunikationsprotokolls Folgendes umfasst:
- Erfassen (702 bis 707; 802 bis 806), ob es der Knotenvorrichtung, vor dem Verstreichen einer ersten Verzögerung gelungen ist, sich bei dem Kommunikationsnetzwerk unter Verwendung des aktuellen von der Knotenvorrichtung implementierten Kommunikationsprotokolls anzumelden; und
- Erfassen des von der Konzentratorvorrichtung implementierten Kommunikationsprotokolls als:
∘ identisch mit dem aktuellen von der Knotenvorrichtung implementierten Kommunikationsprotokoll, wenn es der Knotenvorrichtung vor dem Verstreichen der ersten Verzögerung gelungen ist, sich bei dem Kommunikationsnetzwerk anzumelden;
∘ von dem aktuellen von der Knotenvorrichtung implementierten Kommunikationsprotokolls unterschiedlich, wenn es der Knotenvorrichtung vor dem Verstreichen der ersten Verzögerung nicht gelungen ist, sich bei dem Kommunikationsnetzwerk anzumelden.

7. Verfahren nach einem der Ansprüche 4 und 5, wobei das Abhören des Kommunikationsnetzwerks zum Erfassen des von der Konzentratorvorrichtung implementierten Kommunikationsprotokolls Folgendes umfasst:
- Erfassen (1002, 1003) eines über das Kommunikationsnetzwerk empfangenen Rahmens;
- Analysieren (1004, 1005, 1007, 1008) einer Präambel des empfangenen Rahmens; und
- in Abhängigkeit von der Struktur der Präambel des empfangenen Rahmens, Erfassen (1006, 1009) des von der Konzentratorvorrichtung implementierten Kommunikationsprotokolls.

8. Verfahren nach einem der Ansprüche 4 und 5, wobei das Abhören des Kommunikationsnetzwerks zum Erfassen des von der Konzentratorvorrichtung implementierten Kommunikationsprotokolls Folgendes umfasst:
- Auslösen einer zweiten Verzögerung;
- während der zweiten Verzögerung, bei jeder Erfassung eines über das Kommunikationsnetzwerk empfangenen Rahmens:
∘ Analysieren (1104, 1105, 1107, 1108) einer Präambel des empfangenen Rahmens; und
∘ in Abhängigkeit von der Struktur der Präambel des empfangenen Rahmens, Inkrementieren (1106) eines ersten Zählers, der einem ersten Kommunikationsprotokoll zugeordnet ist, wenn die Struktur der Präambel des empfangenen Rahmens einem Rahmen gemäß dem ersten Kommunikationsprotokoll entspricht, oder Inkrementieren (1109) eines zweiten Zählers, der einem zweiten Kommunikationsprotokoll zugeordnet ist, wenn die Struktur der Präambel des empfangenen Rahmens einem Rahmen gemäß dem zweiten Kommunikationsprotokoll entspricht;
- nach Verstreichen (1110) der zweiten Verzögerung Erfassen (1111, 1112, 1113) des von der Konzentratorvorrichtung implementierten Kommunikationsprotokolls als das dem Zähler mit dem größeren Wert von dem ersten und dem zweiten Zähler zugeordnete Protokoll.

9. Verfahren nach einem der Ansprüche 1 bis 3, wobei das vorbestimmte Ereignis der Empfang (1404) durch die Knotenvorrichtung über einen bestimmten Kommunikationskanal des Kommunikationsnetzwerks eines Protokollumschaltbefehls ist, der von der Konzentratorvorrichtung übertragen wird.

10. Knotenvorrichtung (130 bis 139), die dazu konfiguriert ist, mit einer Konzentratorvorrichtung (110) über ein Kommunikationsnetzwerk (121) zu kommunizieren, das auf einem Stromversorgungsnetz implementiert ist, wobei die Knotenvorrichtung zwei Protokollstapel (302, 303) speichert und eine elektronische Schaltungsanordnung (400) umfasst, die dazu konfiguriert ist, das Verfahren nach einem der Ansprüche 1 bis 9 umzusetzen.

11. Computerprogrammprodukt, das Anweisungen umfasst, die das Ausführen durch einen Prozessor (401) des Verfahrens nach einem der Ansprüche 1 bis 9 bewirkt, wenn die Anweisungen von dem Prozessor ausgeführt werden.

12. Speichermedium (403), das ein Computerprogramm speichert, das Anweisungen umfasst, die die Ausführung durch einen Prozessor (401) des Verfahrens nach einem der Ansprüche 1 bis 9 bewirkt, wenn die Anweisungen von dem Prozessor gelesen und ausgeführt werden.

13. Realisierungsverfahren einer Aktualisierung eines Kommunikationsnetzwerks, das eine Konzentratorvorrichtung (110) und eine Vielzahl von Knotenvorrichtungen (130 bis 139) umfasst, wobei jede Knotenvorrichtung eine elektronische Schaltungsanordnung (400) umfasst, die dazu konfiguriert sind, das Verfahren nach einem der Ansprüche 1 bis 9 zu implementieren, wobei jede Knotenvorrichtung zwei Protokollstapel (302, 303) speichert, die jeweils das Implementieren eines unterschiedlichen Kommunikationsprotokolls aus dem ersten und dem zweiten Kommunikationsprotokoll erlauben, **dadurch gekennzeichnet, dass**:
- vor der Aktualisierung der Konzentratorvorrichtung die Konzentratorvorrichtung das erste Kommunikationsprotokoll zum Kommunizieren mit Knotenvorrichtungen unter den Knotenvorrichtungen, die sich bei ihm unter Verwendung des ersten Kommunikationsprotokolls angemeldet haben, implementiert (1401 bis 1403);
- nach der Aktualisierung der Konzentratorvorrichtung die Konzentratorvorrichtung das zweite Kommunikationsprotokoll zum Kommunizieren mit Knotenvorrichtungen unter den Knotenvorrichtungen, die sich bei ihm unter Verwendung des zweiten Kommunikationsprotokolls angemeldet haben, implementiert (1404); und
- durch Ausführen des Verfahrens nach einem der Ansprüche 1 bis 9, jede Knotenvorrichtung, die sich bei der Konzentratorvorrichtung unter Verwendung des ersten Kommunikationsprotokolls angemeldet hat, den Protokollstapel umschaltet (1404), um das aktuelle von der Knotenvorrichtung implementierte Kommunikationsprotokoll auf das zweite Kommunikationsprotokoll zu ändern.

14. Aktualisierungsverfahren eines Kommunikationsnetzwerks, das eine Konzentratorvorrichtung (110) und eine Vielzahl von Knotenvorrichtungen (130 bis 139) umfasst, wobei jede Knotenvorrichtung eine elektronische Schaltungsanordnung (400) umfasst, die dazu konfiguriert ist, das Verfahren nach einem der Ansprüche 1 bis 9 zu implementieren, wobei jede Knotenvorrichtung zwei Protokollstapel (302, 303) speichert, die jeweils das Implementieren eines unterschiedlichen Kommunikationsprotokolls aus dem ersten und dem zweiten Kommunikationsprotokoll erlauben, **dadurch gekennzeichnet, dass** die Konzentratorvorrichtung (110) eine elektronische Schaltungsanordnung (400) umfasst, die konfiguriert ist zum:
- vor der Aktualisierung der Konzentratorvorrichtung, Implementieren (1401 bis 1403) des ersten Kommunikationsprotokolls zum Kommunizieren mit Knotenvorrichtungen unter den Knotenvorrichtungen, die sich bei ihm unter Verwendung des ersten Kommunikationsprotokolls angemeldet haben; und
- nach der Aktualisierung der Konzentratorvorrichtung, Implementieren (1404) des zweiten Kommunikationsprotokolls zum Kommunizieren mit Knotenvorrichtungen unter den Knotenvorrichtungen, die sich bei ihm unter Verwendung des zweiten Kommunikationsprotokolls angemeldet haben;
und dass die Schaltungsanordnung (400) jeder Knotenvorrichtung (130 bis 139) dazu konfiguriert ist, nach Aktualisierung der Konzentratorvorrichtung:
- wenn sich die Knotenvorrichtung bei der Konzentratorvorrichtung unter Verwendung des ersten Kommunikationsprotokolls angemeldet hat, das Verfahren nach einem der Ansprüche 1 bis 9 auszuführen, um von dem einen der Protokollstapel auf den anderen umzuschalten (1404), um das aktuelle von der Knotenvorrichtung verwendete Kommunikationsprotokoll auf das zweite Kommunikationsprotokoll zu ändern.

## Claims

1. Method for configuring a current communication protocol of a node device (130 to 139), to communicate with a concentrator device (110) via a communication network (121) implemented on an electrical supply network, **characterised in that** the method is implemented by the node device, which comprises electronic circuitry (400) and stores two protocol stacks (302, 303), each protocol stack making it possible, when it is executed by the electronic circuitry of the node device, to implement a distinct communication protocol with the concentrator device on the communication network, and **in that** the method comprises:
- detecting (501) a predetermined event; and
- if said event is detected, switching (502) from one of the protocol stacks to the other, in order to change the current communication protocol implemented by the node device.

2. Method according to claim 1, wherein the node device (130 to 139) is a smart meter.

3. Method according to either one of claims 1 and 2, wherein one of the protocol stacks (303) makes it possible to implement the PRIME, standing for "PoweRline Intelligent Metering Evolution", communication protocol, and the other one of the protocol stacks (302) makes it possible to implement the M&M, standing for "Meters & More", communication protocol.

4. Method according to any one of claims 1 to 3, wherein the detection of a predetermined event comprises:
- listening to the communication network to detect (602, 606; 902) the communication protocol implemented by the concentrator device; and
- detecting (603, 607) whether the current communication protocol implemented by the node device is different from the current communication protocol implemented by the concentrator device;
and wherein the predetermined event is a detection that the current communication protocol implemented by the node device is different from the communication protocol implemented by the concentrator device.

5. Method according to claim 4, wherein the communication network is listened to only if (701; 801) the node device has not already registered itself with the communication network by having used the current communication protocol implemented by the node device.

6. Method according to either one of claims 4 and 5, wherein listening to the communication network to detect the communication protocol implemented by the concentrator device comprises:
- detecting (702 to 707; 802 to 806) whether, before a first time delay has elapsed, the node device has succeeded in registering with the communication network by using the current communication protocol implemented by the node device; and
- detecting the communication protocol implemented by the concentrator device as being:
∘ identical to the current communication protocol implemented by the node device if, before the first time delay has elapsed, the node device has succeeded in registering with the communication network;
∘ different from the current communication protocol implemented by the node device if, before the first time delay has elapsed, the node device has not succeeded in registering with the communication network.

7. Method according to either one of claims 4 and 5, wherein listening to the communication network to detect the communication protocol implemented by the concentrator device comprises:
- detecting (1002, 1003) a frame received via the communication network;
- analysing (1004, 1005, 1007, 1008) a preamble of the frame received; and
- according to the structure of the preamble of the frame received, detecting (1006, 1009) the communication protocol implemented by the concentrator device.

8. Method according to either one of claims 4 and 5, wherein listening to the communication network to detect the communication protocol implemented by the concentrator device comprises:
- triggering a second time delay;
- during the second time delay, each time a frame received via the communication network is detected:
∘ analysing (1104, 1105, 1107, 1108) a preamble of the frame received; and
∘ according to the structure of the preamble of the frame received, incrementing (1106) a first counter associated with a first communication protocol if the structure of the preamble of the frame received corresponds to a frame according to said first communication protocol or incrementing (1109) a second counter associated with a second communication protocol if the structure of the preamble of the frame received corresponds to a frame according to the second communication protocol;
- after the second time delay has elapsed (1110), detecting (1111, 1112, 1113) the communication protocol implemented by the concentrator device as being the protocol associated with whichever of the first and second counters has the highest value.

9. Method according to any one of claims 1 to 3, wherein the predetermined event is the reception (1404) by the node device, via a particular communication channel of the communication network, of a protocol-switching command transmitted by the concentrator device.

10. Node device (130 to 139) configured to communicate with a concentrator device (110) via a communication network (121) implemented on an electrical supply network, the node device storing two protocol stacks (302, 303) and comprising electronic circuitry (400) configured to implement the method according to any one of claims 1 to 9.

11. Computer program product, comprising instructions causing the implementation, by a processor (401), of the method according to any one of claims 1 to 9, when said instructions are executed by the processor.

12. Storage medium (403) storing a computer program comprising instructions causing the implementation, by a processor (401), of the method according to any one of claims 1 to 9, when said instructions are read and executed by the processor.

13. Method for implementing an updating of a communication network comprising a concentrator device (110) and a plurality of node devices (130 to 139), each node device comprising electronic circuitry (400) configured to implement the method according to any one of claims 1 to 9, each node device storing two protocol stacks (302, 303) each making it possible to implement a distinct communication protocol from the first and second communication protocols, **characterised in that**:
- before the concentrator device is updated, the concentrator device implements (1401 to 1403) the first communication protocol for communicating with node devices, among said node devices, that have registered with it by using the first communication protocol,
- after the concentrator device is updated, the concentrator device implements (1404) the second communication protocol for communicating with node devices, among said node devices, that have registered with it by using the second communication protocol; and
- by implementing the method mentioned above according to any one of claims 1 to 9, each node device registered with the concentrator device by using the first communication protocol switches (1404) protocol stack in order to change the current communication protocol implemented by the node device to the second communication protocol.

14. System for updating a communication network comprising a concentrator device (110) and a plurality of node devices (130 to 139), each node device comprising electronic circuitry (400) configured to implement the method according to any one of claims 1 to 9, each node device storing two protocol stacks (302, 303) each making it possible to implement a distinct communication protocol from the first and second communication protocols, **characterised in that** the concentrator device (110) comprises electronic circuitry (400) configured to:
- before the concentrator device is updated, implement (1401 to 1403) the first communication protocol for communicating with node devices, among said node devices, that have registered with it by using the first communication protocol; and
- after the concentrator device is updated, implement (1404) the second communication protocol for communicating with node devices, among said node devices, that have registered with it by using the second communication protocol;
and **in that** the electronic circuitry (400) of each node device (130 to 139) is configured to, after the concentrator device is updated:
- if said node device is registered with the concentrator device by using the first communication protocol, implement the method according to any one of claims 1 to 9 to switch (1404) from one of the protocol stacks to the other, in order to change the current communication protocol implemented by the node device to the second communication protocol.
